# EUROPEAN PATENT APPLICATION

(11) **EP 4 513 779 A1**
(43) Date of publication of application: **26.02.2025**
(21) Application number: 23806873.8
(22) Date of filing: 15.05.2023
(51) Int. Cl.: H04B 7/06

(54) **COMMUNICATION METHOD, APPARATUS AND SYSTEM**

(30) Priority: 18.05.2022 CN 202210537600
(71) Applicant: Huawei Technologies Co., Ltd., Shenzhen, Guangdong 518129 (CN)
(72) Inventor: HU, Mengshi, Shenzhen, Guangdong 518129 (CN); YU, Jian, Shenzhen, Guangdong 518129 (CN); GAN, Ming, Shenzhen, Guangdong 518129 (CN)
(74) Representative: Epping - Hermann - Fischer
(86) International application number: PCT/CN2023/094190
(87) International publication number: WO 2023/221921

(57) **Abstract**

This application provides a communication method, apparatus, and system. In the method, in a low frequency band, a time domain resource is allocated and configuration information is indicated, so that an initiator and a receiver complete beamforming training in a high frequency band, and beamforming training is supported between one initiator and a plurality of responders. This improves beamforming training efficiency, and further improves communication efficiency and communication quality. This application is applied to a wireless local area network system that supports 802.11 series protocols such as a next-generation Wi-Fi protocol of IEEE 802.11ax, for example, 802.11be, Wi-Fi 7, or EHT, and a next-generation protocol of 802.11be or Wi-Fi 8. This application may also be applied to an ultra-wideband-based wireless personal area network system or a sensing (sensing) system.

## Description

This application claims priority to Chinese Patent Application No. 202210537600.6, filed with the China National Intellectual Property Administration on May 18, 2022 and entitled "COMMUNICATION METHOD, APPARATUS, AND SYSTEM", which is incorporated herein by reference in its entirety.

### TECHNICAL FIELD

This application relates to the communication field, and in particular, to a communication method, apparatus, and system.

### BACKGROUND

Data traffic rapidly grows with development of the mobile internet and popularization of smart terminals. A wireless local area network (wireless local area network, WLAN) technology with advantages of a high rate and low costs has become one of mainstream mobile broadband access technologies. The WLAN may include one or more basic service sets (basic service sets, BSSs), and network devices in the BSS include an access point (access point, AP) and a station (station, STA). In high-frequency (for example, above 45 GHz) communication, a signal attenuation degree is large. When a station needs to establish association with an AP or communicate with another device, beamforming training needs to be performed, in other words, an appropriate transmit direction or receive direction is found. Currently, in a high frequency beamforming training process, in an association beamforming training (association beamforming training, A-BFT) phase, a responder, for example, a STA, needs to complete a responder-transmit sector sweep (responder-transmit sector sweep, R-TXSS) and randomly selects a resource to send a message. If there are a plurality of STAs, resources selected by the plurality of STAs may be the same. As a result, a message receiving conflict occurs at an initiator (for example, an AP), and beamforming training efficiency is affected. To resolve the conflict, a quantity of pre-allocated slots used for beamforming training may be increased. However, this causes high overheads.

Therefore, how to reduce overheads and improve beamforming training efficiency to further improve communication efficiency and communication quality is an urgent problem to be resolved.

### SUMMARY

Embodiments of this application provide a communication method, apparatus, and system, to improve beamforming training efficiency, so as to further improve communication efficiency.

According to a first aspect, a communication method is provided. The method may include: A first device receives, in a first frequency band, indication information from a second device, where the indication information indicates a first time domain resource, the first time domain resource is used for beamforming training between N devices and the second device, the first device is one of the N devices, and N is a positive integer greater than or equal to 2. The first device determines a second time domain resource, and performs beamforming training with the second device in a second frequency band over the second time domain resource, where the second time domain resource belongs to the first time domain resource, and a maximum frequency of the first frequency band is less than a minimum frequency of the second frequency band.

That the second time domain resource belongs to the first time domain resource may be that the second time domain resource a subset of the first time domain resource. In other words, the second time domain resource is a part of the first time domain resource.

In the method, the second device allocates a time domain resource in one frequency band, for example, the first frequency band, and beamforming training between the first device and the second device is completed in another frequency band, for example, the second frequency band. In addition, beamforming training between the second device (initiator) and a plurality of devices (responders) is supported on the time domain resource. This effectively improves beamforming training efficiency, and avoids a conflict between resources used for beamforming training between the plurality of devices and the second device. In addition, time domain resources used for beamforming training are configured via the indication information, thereby reducing overheads, improving communication efficiency, and further improving communication quality. With reference to the first aspect, in some implementations of the first aspect, the indication information is carried in a first beacon frame, the first time domain resource is between the first beacon frame and a second beacon frame, and the second beacon frame is a next beacon frame of the first beacon frame.

That the first time domain resource is between the first beacon frame and a second beacon frame may be that the first time domain resource is between a time domain resource occupied by the first beacon frame and a time domain resource occupied by the second beacon frame.

Optionally, types of the first beacon frame and the second beacon frame may be high frequency beacon frames.

With reference to the first aspect, in some implementations of the first aspect, the indication information includes first information and N pieces of second information, the N pieces of second information one-to-one correspond to the N devices, the first information indicates the first time domain resource, the N pieces of second information indicate configuration information of the N devices, and the first information and the N pieces of second information belong to a same element. That the first device determines a second time domain resource includes: The first device determines the second time domain resource based on the first information and second information corresponding to the first device.

In this manner, the first information and the second information belong to the same element. In other words, the second device indicates the time domain resources for beamforming training and related configuration information to the first device by using an independent element. This further reduces signaling overheads.

With reference to the first aspect, in some implementations of the first aspect, the first information indicates at least one of the following: a beamforming type, the quantity N of devices, an identifier of the first time domain resource, or a start location of the first time domain resource and a length of the first time domain resource.

With reference to the first aspect, in some implementations of the first aspect, the second information corresponding to the first device indicates at least one of the following: an identifier of the first device, a start location of the second time domain resource, or an offset value of a start location of the second time domain resource relative to the start location of the first time domain resource.

With reference to the first aspect, in some implementations of the first aspect, the indication information includes first indication information and second indication information, the first indication information indicates the first time domain resource, the second indication information indicates configuration information of the N devices, and the first indication information and the second indication information belong to different elements. That the first device determines a second time domain resource includes: The first device determines the second time domain resource based on the first indication information and the second indication information.

In this manner, the second device indicates the time domain resources for beamforming training and related configuration information by combining different elements. This increases diversity of indication manners.

With reference to the first aspect, in some implementations of the first aspect, the first indication information indicates at least one of the following: an identifier of the first time domain resource, or a start location of the first time domain resource and duration of the first time domain resource, where the identifier of the first time domain resource is used to associate with the second indication information.

With reference to the first aspect, in some implementations of the first aspect, the second indication information includes third information and N pieces of fourth information; the N pieces of fourth information one-to-one correspond to the N devices; the third information indicates a beamforming type, the quantity N of devices, or the identifier of the first time domain resource; and fourth information corresponding to the first device indicates at least one of the following: an identifier of the first device, a start location of the second time domain resource, or an offset value of a start location of the second time domain resource relative to the start location of the first time domain resource.

With reference to the first aspect, in some implementations of the first aspect, the method further includes: The first device determines, based on the identifier that is of the first time domain resource and that is indicated by the third information and the identifier that is of the first time domain resource and that is indicated by the first indication information, that the second time domain resource indicated by the fourth information is associated with the first time domain resource.

In other words, the first device receives the third information and the fourth information, where a same time domain resource identifier exists in the third information and the fourth information, and may indicate that a time domain resource indicated by the third information is associated with a time domain resource indicated by the fourth information.

In this manner, the second time domain resource and the first time domain resource are bound by using the time domain resource identifier, and a device identifier is indicated, so that the plurality of devices can respectively determine time domain resources that belong to the plurality of devices. This avoids a conflict between the time domain resources occupied by the plurality of devices. With reference to the first aspect, in some implementations of the first aspect, on the first time domain resource, the beamforming type includes an AP-TXSS and at least one R-TXSS, or an AP-TXSS and at least one R-RXSS.

According to a second aspect, a communication method is provided. The communication method may include: A second device sends indication information in a first frequency band, where the indication information indicates a first time domain resource, the first time domain resource is used for beamforming training between N devices and the second device, and N is a positive integer greater than or equal to 2. The second device performs beamforming training with a first device in a second frequency band over a second time domain resource, where the second time domain resource belongs to the first time domain resource, a maximum frequency of the first frequency band is less than a minimum frequency of the second frequency band, and the first device is one of the N devices.

With reference to the second aspect, in some implementations of the second aspect, the indication information is carried in a first beacon frame, the first time domain resource is between the first beacon frame and a second beacon frame, and the second beacon frame is a next beacon frame of the first beacon frame.

With reference to the second aspect, in some implementations of the second aspect, the indication information includes first information and N pieces of second information, the N pieces of second information one-to-one correspond to the N devices, the first information indicates the first time domain resource, the N pieces of second information indicate configuration information of the N devices, and the first information and the N pieces of second information belong to a same element. With reference to the second aspect, in some implementations of the second aspect, the first information indicates at least one of the following: a beamforming type, the quantity N of devices, an identifier of the first time domain resource, or a start location of the first time domain resource and a length of the first time domain resource.

With reference to the second aspect, in some implementations of the second aspect, second information corresponding to the first device indicates at least one of the following: an identifier of the first device, a start location of the second time domain resource, or an offset value of a start location of the second time domain resource relative to the start location of the first time domain resource, where the first device is one of the N devices.

With reference to the second aspect, in some implementations of the second aspect, the indication information includes first indication information and second indication information, the first indication information indicates the first time domain resource, the second indication information indicates configuration information of the N devices, and the first indication information and the second indication information belong to different elements.

With reference to the second aspect, in some implementations of the second aspect, the first indication information indicates at least one of the following: an identifier of the first time domain resource, or a start location of the first time domain resource and duration of the first time domain resource, where the identifier of the first time domain resource is used to associate with the second indication information.

With reference to the second aspect, in some implementations of the second aspect, the second indication information includes third information and N pieces of fourth information; the N pieces of fourth information one-to-one correspond to the N devices; the third information indicates a beamforming type, the quantity N of devices, or the identifier of the first time domain resource; and fourth information corresponding to the first device indicates at least one of the following: an identifier of the first device, a start location of the second time domain resource, or an offset value of a start location of the second time domain resource relative to the start location of the first time domain resource, where the first device is one of the N devices.

With reference to the second aspect, in some implementations of the second aspect, on the first time domain resource, the beamforming type includes an AP-TXSS and at least one R-TXSS, or an AP-TXSS and at least one R-RXSS.

It should be understood that the second aspect is a peer-side implementation corresponding to the first aspect, and explanations, supplements, and beneficial effects of the first aspect are also applicable to the second aspect. Details are not described again.

According to a third aspect, a communication apparatus is provided. The communication apparatus may include a transceiver module and a processing module. The transceiver module is configured to receive, in a first frequency band, indication information from a second device, where the indication information indicates a first time domain resource, the first time domain resource is used for beamforming training between N devices and the second device, the first device is one of the N devices, and N is a positive integer greater than or equal to 2. The processing module is configured to: determine a second time domain resource, and perform beamforming training with the second device in a second frequency band over the second time domain resource, where the second time domain resource belongs to the first time domain resource, and a maximum frequency of the first frequency band is less than a minimum frequency of the second frequency band.

With reference to the third aspect, in some implementations of the third aspect, the indication information is carried in a first beacon frame, the first time domain resource is between the first beacon frame and a second beacon frame, and the second beacon frame is a next beacon frame of the first beacon frame.

With reference to the third aspect, in some implementations of the third aspect, the indication information includes first information and N pieces of second information, the N pieces of second information one-to-one correspond to the N devices, the first information indicates the first time domain resource, the N pieces of second information indicate configuration information of the N devices, and the first information and the N pieces of second information belong to a same element. That the first device determines a second time domain resource includes: The first device determines the second time domain resource based on the first information and second information corresponding to the first device.

With reference to the first aspect, in some implementations of the first aspect, the first information indicates at least one of the following: a beamforming type, the quantity N of devices, an identifier of the first time domain resource, a start location of the first time domain resource, or a length of the first time domain resource.

With reference to the third aspect, in some implementations of the third aspect, the second information corresponding to the first device indicates at least one of the following: an identifier of the first device, or a start location of the second time domain resource and an offset value of a start location of the second time domain resource relative to the start location of the first time domain resource.

With reference to the third aspect, in some implementations of the third aspect, the indication information includes first indication information and second indication information, the first indication information indicates the first time domain resource, the second indication information indicates configuration information of the N devices, and the first indication information and the second indication information belong to different elements. The processing module is configured to determine the second time domain resource based on the first indication information and the second indication information.

With reference to the third aspect, in some implementations of the third aspect, the first indication information indicates at least one of the following: an identifier of the first time domain resource, or a start location of the first time domain resource and duration of the first time domain resource, where the identifier of the first time domain resource is used to associate with the second indication information.

With reference to the third aspect, in some implementations of the third aspect, the second indication information includes third information and N pieces of fourth information; the N pieces of fourth information one-to-one correspond to the N devices; the third information indicates a beamforming type, the quantity N of devices, or the identifier of the first time domain resource; and fourth information corresponding to the first device indicates at least one of the following: an identifier of the first device, a start location of the second time domain resource, or an offset value of a start location of the second time domain resource relative to the start location of the first time domain resource.

With reference to the third aspect, in some implementations of the third aspect, the processing module is further configured to determine, by the first device based on the identifier that is of the first time domain resource and that is indicated by the third information and the identifier that is of the first time domain resource and that is indicated by the first indication information, that the second time domain resource indicated by the fourth information is associated with the first time domain resource.

With reference to the third aspect, in some implementations of the third aspect, on the first time domain resource, the beamforming type includes an AP-TXSS and at least one R-TXSS, or an AP-TXSS and at least one R-RXSS.

It should be understood that the third aspect is an apparatus-side implementation corresponding to the first aspect, and explanations, supplements, and beneficial effects of the first aspect are also applicable to the third aspect. Details are not described again.

According to a fourth aspect, a communication apparatus is provided. The communication apparatus may include a transceiver module and a processing module. The transceiver module is configured to send indication information in a first frequency band, where the indication information indicates a first time domain resource, the first time domain resource is used for beamforming training between N devices and the second device, and N is a positive integer greater than or equal to 2. The processing module is configured to perform beamforming training with a first device in a second frequency band over a second time domain resource, where the second time domain resource belongs to the first time domain resource, a maximum frequency of the first frequency band is less than a minimum frequency of the second frequency band, and the first device is one of the N devices.

With reference to the fourth aspect, in some implementations of the fourth aspect, the indication information is carried in a first beacon frame, the first time domain resource is between the first beacon frame and a second beacon frame, and the second beacon frame is a next beacon frame of the first beacon frame.

With reference to the fourth aspect, in some implementations of the fourth aspect, the indication information includes first information and N pieces of second information, the N pieces of second information one-to-one correspond to the N devices, the first information indicates the first time domain resource, the N pieces of second information indicate configuration information of the N devices, and the first information and the N pieces of second information belong to a same element. With reference to the fourth aspect, in some implementations of the fourth aspect, the first information indicates at least one of the following: a beamforming type, the quantity N of devices, an identifier of the first time domain resource, or a start location of the first time domain resource and a length of the first time domain resource.

With reference to the fourth aspect, in some implementations of the fourth aspect, second information corresponding to the first device indicates at least one of the following: an identifier of the first device, a start location of the second time domain resource, or an offset value of a start location of the second time domain resource relative to the start location of the first time domain resource, where the first device is one of the N devices.

With reference to the fourth aspect, in some implementations of the fourth aspect, the indication information includes first indication information and second indication information, the first indication information indicates the first time domain resource, the second indication information indicates configuration information of the N devices, and the first indication information and the second indication information belong to different elements.

With reference to the fourth aspect, in some implementations of the fourth aspect, the first indication information indicates at least one of the following: an identifier of the first time domain resource, or a start location of the first time domain resource and duration of the first time domain resource, where the identifier of the first time domain resource is used to associate with the second indication information.

With reference to the fourth aspect, in some implementations of the fourth aspect, the second indication information includes third information and N pieces of fourth information; the N pieces of fourth information one-to-one correspond to the N devices; the third information indicates a beamforming type, the quantity N of devices, or the identifier of the first time domain resource; and fourth information corresponding to the first device indicates at least one of the following: an identifier of the first device, a start location of the second time domain resource, or an offset value of a start location of the second time domain resource relative to the start location of the first time domain resource, where the first device is one of the N devices.

With reference to the fourth aspect, in some implementations of the fourth aspect, on the first time domain resource, the beamforming type includes an AP-TXSS and at least one R-TXSS, or an AP-TXSS and at least one R-RXSS.

It should be understood that the fourth aspect is an apparatus-side implementation corresponding to the second aspect, and explanations, supplements, and beneficial effects of the second aspect are also applicable to the fourth aspect. Details are not described again.

According to a fifth aspect, an embodiment of this application provides a communication apparatus, including an interface circuit and a processor. The interface circuit is configured to implement a function of the transceiver module in the third aspect, and the processor is configured to implement functions of the processing module in the third aspect.

According to a sixth aspect, an embodiment of this application provides a communication apparatus, including an interface circuit and a processor. The interface circuit is configured to implement a function of the transceiver module in the fourth aspect, and the processor is configured to implement a function of the processing module in the fourth aspect.

According to a seventh aspect, an embodiment of this application provides a computer-readable medium. The computer-readable medium stores program code to be executed by a terminal apparatus, and the program code includes instructions for performing the method in the first aspect, any one of the possible manners of the first aspect, or all the possible manners of the first aspect.

According to an eighth aspect, an embodiment of this application provides a computer-readable medium. The computer-readable medium stores program code to be executed by a network apparatus, and the program code includes instructions for performing the method in the second aspect, any one of the possible manners of the second aspect, or all the possible manners of the second aspect.

According to a ninth aspect, a computer program product storing computer-readable instructions is provided. When the computer-readable instructions are run on a computer, the computer is enabled to perform the method in the first aspect, any one of the possible manners of the first aspect, or all the possible manners of the first aspect.

According to a tenth aspect, a computer program product storing computer-readable instructions is provided. When the computer-readable instructions are run on a computer, the computer is enabled to perform the method in the second aspect, any one of the possible manners of the second aspect, or all the possible manners of the second aspect.

According to an eleventh aspect, a communication system is provided. The communication system includes an apparatus that has a function of implementing the method in the first aspect, any one of the possible manners of the first aspect, or all the possible manners of the first aspect and various possible designs and an apparatus that has a function of implementing the method in the second aspect, any one of the possible manners of the second aspect, or all the possible manners of the second aspect and various possible designs.

According to a twelfth aspect, a processor is provided, configured to be coupled to a memory, and configured to perform the method in the first aspect, any one of the possible manners of the first aspect, or all the possible manners of the first aspect.

According to a thirteenth aspect, a processor is provided, configured to be coupled to a memory, and configured to perform the method in the second aspect, any one of the possible manners of the second aspect, or all the possible manners of the second aspect.

According to a fourteenth aspect, a chip system is provided. The chip system includes a processor, and may further include a memory. The processor is configured to execute a computer program or instructions stored in the memory, so that the chip system implements the method in the first aspect, any one of the possible manners of the first aspect, or all the possible implementations of the first aspect. The chip system may include a chip, or may include a chip and another discrete component.

According to a fifteenth aspect, a chip system is provided. The chip system includes a processor, and may further include a memory. The processor is configured to execute a computer program or instructions stored in the memory, so that the chip system implements the method in the second aspect, any one of the possible implementations of the second aspect, or all the possible implementations of the second aspect. The chip system may include a chip, or may include a chip and another discrete component.

### BRIEF DESCRIPTION OF DRAWINGS

FIG. 1 is a diagram of a communication system applicable to an embodiment of this application;
FIG. 2 is a diagram of a structure of an access point applicable to an embodiment of this application;
FIG. 3 is a diagram of a structure of a station applicable to an embodiment of this application;
FIG. 4 is a diagram of a structure of a resource;
FIG. 5 is a diagram of beamforming training;
FIG. 6 is a diagram of a communication method according to an embodiment of this application;
FIG. 7 is a diagram of a structure of a resource according to an embodiment of this application;
FIG. 8 is a diagram of a structure of still another resource according to an embodiment of this application;
FIG. 9(a) and FIG. 9(b) are a diagram of indication information according to an embodiment of this application;
FIG. 10 is a diagram of still another indication information according to an embodiment of this application;
FIG. 11 is a block diagram of a communication apparatus according to an embodiment of this application; and
FIG. 12 is a block diagram of still another communication apparatus according to an embodiment of this application.

### DESCRIPTION OF EMBODIMENTS

The following describes technical solutions in embodiments of this application with reference to accompanying drawings.

The technical solutions in embodiments of this application may be applied to various communication systems, for example, a wireless local area network (wireless local area network, WLAN) communication system or a future communication system.

The following describes an application scenario in embodiments of this application and a method in embodiments of this application by using the WLAN system as an example.

Specifically, embodiments of this application may be applied to a WLAN, and embodiments of this application may be applied to any protocol in the IEEE 802.11 series protocols currently used in the WLAN. The WLAN may include one or more basic service sets (basic service sets, BSSs), and network devices in the BSS include an AP and a STA. Each BSS may include one AP and a plurality of STAs associated with the AP.

A transmitter and/or a receiver in embodiments of this application may be a user station (STA) in the WLAN. The user station may also be referred to as a system, a subscriber unit, an access terminal, a mobile station, a remote station, a remote terminal, a mobile device, a user terminal, a terminal, a wireless communication device, a user agent, a user apparatus, or user equipment (user equipment, UE). The STA may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless local area network (for example, Wi-Fi) communication function, a wearable device, a computing device, or another processing device connected to a wireless modem.

In addition, the transmitter and/or the receiver in embodiments of this application may alternatively be an AP in the WLAN. The AP may be configured to: communicate with an access terminal through the wireless local area network, and transmit data of the access terminal to a network side, or transmit data from a network side to the access terminal.

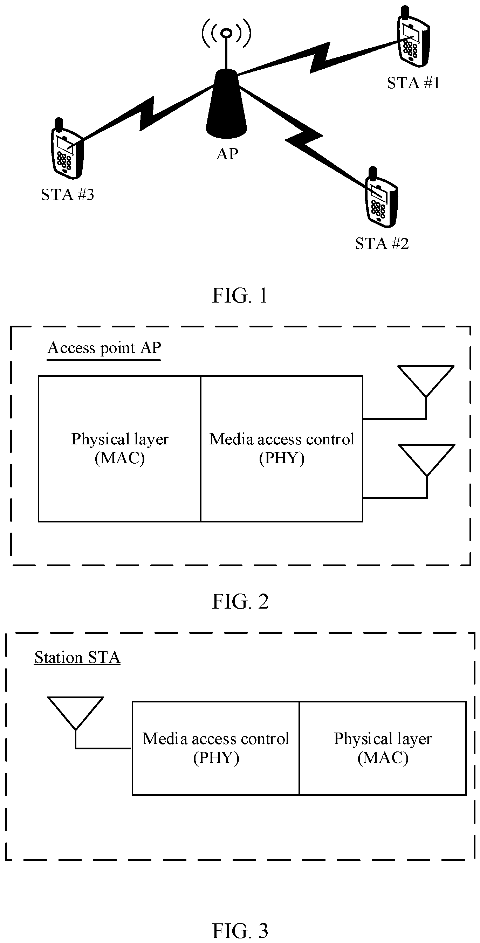

For ease of understanding embodiments of this application, a communication system shown in FIG. 1 is first used as an example to describe in detail a communication system applicable to embodiments of this application. A scenario system shown in FIG. 1 may be a WLAN system. The WLAN system in FIG. 1 may include one or more APs and one or more STAs. In FIG. 1, communication between one AP (for example, an AP shown in FIG. 1) and three STAs (for example, a STA #1, a STA #2, and a STA #3 shown in FIG. 1) is used as an example.

Wireless communication may be performed between the AP and the STA in various communication modes. For example, a transmission mode between the AP and the STA includes but is not limited to a single-carrier communication technology, an orthogonal frequency-division multiple access (orthogonal frequency-division multiple access, OFDMA) manner, a multi-station channel multiple-input multiple-output (multi-user multiple-input multiple-output, MU-MIMO) manner, an OFDMA and MU-MIMO hybrid transmission mode, or a single-user multiple-input multiple-output (single-user multiple-input multiple-output, SU-MIMO) technology.

The AP is also referred to as a wireless access point, a hotspot, or the like. APs are access points for mobile users to access wired networks, and are mainly deployed in homes, buildings, and campuses, or are deployed outdoors. The AP is equivalent to a bridge that connects a wired network and a wireless network. A main function of the AP is to connect wireless network clients together, and then connect the wireless network to the Ethernet. Specifically, the AP may be a terminal device or a network device with a wireless fidelity (wireless fidelity, Wi-Fi) chip. Optionally, the AP may be a device that supports a plurality of WLAN standards such as 802.11.

FIG. 2 shows a diagram of an internal structure of an AP. The AP may have a plurality of antennas or may have a single antenna. In FIG. 2, the AP includes a physical layer (physical layer, PHY) processing circuit and a media access control (media access control, MAC) processing circuit. The physical layer processing circuit may be configured to process a physical layer signal, and the MAC layer processing circuit may be configured to process a MAC layer signal.

A STA product is usually a terminal product, for example, a mobile phone, or a notebook computer, that supports the 802.11 series standards. FIG. 3 shows a diagram of a structure of a STA having a single antenna. In an actual scenario, the STA may alternatively have a plurality of antennas, and may be a device having more than two antennas. In FIG. 3, the STA may include a PHY processing circuit and a MAC processing circuit. The physical layer processing circuit may be configured to process a physical layer signal, and the MAC layer processing circuit may be configured to process a MAC layer signal.

It should be noted that FIG. 2 and FIG. 3 are merely simple diagrams, and do not constitute any limitation on the protection scope of this application. For internal structures of the AP and the STA, refer to descriptions of the conventional technology, or refer to internal structures of an AP and a STA after future technology development. The internal structures of the AP and the STA are not limited in this application, and details are not described again.

For ease of understanding of embodiments of this application, several basic concepts in embodiments of this application are briefly described. It should be understood that the basic concepts described below are briefly described by using basic concepts specified in a WLAN protocol as examples, but embodiments of this application are not limited to being applied only to the WLAN system. Therefore, standard names appearing when the WLAN system is used as an example for description are all functional descriptions, and specific names are not limited, indicate only functions of a device, and may be correspondingly expanded to another system, for example, an NR system or the future communication system.

It should be understood that this application is applied to a wireless local area network system that supports 802.11 series protocols such as a next-generation Wi-Fi protocol of IEEE 802.11ax, for example, 802.11be, Wi-Fi 7, or EHT, and a next-generation protocol of 802.11be or Wi-Fi 8. This application may also be applied to an ultra-wideband-based wireless personal area network system or a sensing (sensing) system.

### 1. Beacon interval

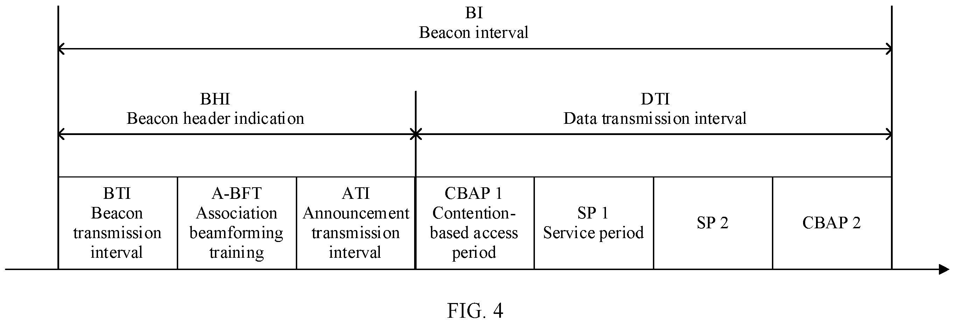

In 802.11ad/ay, a time axis is divided into beacon intervals (beacon intervals, BIs). FIG. 4 is a diagram of a structure of a beacon interval BI. The beacon interval is divided into a beacon header interval (beacon header interval, BHI) and a data transmission interval (data transmission interval, DTI). The BHI further includes a beacon transmission interval (beacon transmission interval, BTI), association beamforming training (association beamforming training, A-BFT), and an announcement transmission interval (announcement transmission interval, ATI).

Specifically, a personal basic service set control point (personal basic service set (PBSS) control point, PCP) or an AP sends a plurality of beacon (beacon) frames in the BTI based on sector numbers, for downlink sector sweep. The A-BFT is used by a STA for association and uplink sector sweep. The ATI is used by the PCP or the AP to poll buffered data information to the STA and allocate a resource in the data transmission interval (data transmission interval, DTI) to the STA. The entire DTI is divided into several subintervals, and the subintervals are divided into a contention-based access period (contention-based access period, CBAP) and a service period (service period, SP) based on an access manner. In the service period, transmission scheduling is performed without contention.

It should be understood that in 802.11ad/ay, the PCP is allowed to communicate with the STA, and behavior corresponding to the PCP is similar to that of the AP. Unless otherwise specified, it may be considered that this application is also applicable to the PCP.

2. High frequency and low frequency: A low frequency (that is, a first frequency band) in this application may be a frequency resource less than or equal to 7 GHz, and a high frequency (that is, a second frequency band) in this application may be a frequency resource greater than or equal to 45 GHz. It should be understood that the high frequency and the low frequency are merely used as examples rather than limitations. A high frequency and a low frequency that are defined in another definition, or a high frequency and a low frequency that are defined in future communication and that are applicable to this application shall also fall within the protection scope of this application.

3. Beamforming (beamforming, BF): Beamforming may also be referred to as beamforming or spatial filtering. Beamforming is a signal processing technique used in sensor arrays for directional signal transmission or reception. In a beamforming technology, a parameter of a basic unit of a phase array is adjusted, so that signals at some angles are constructively interfered and signals at the other angles are destructively interfered. Beamforming can be applied to both a signal transmitter and a signal receiver.

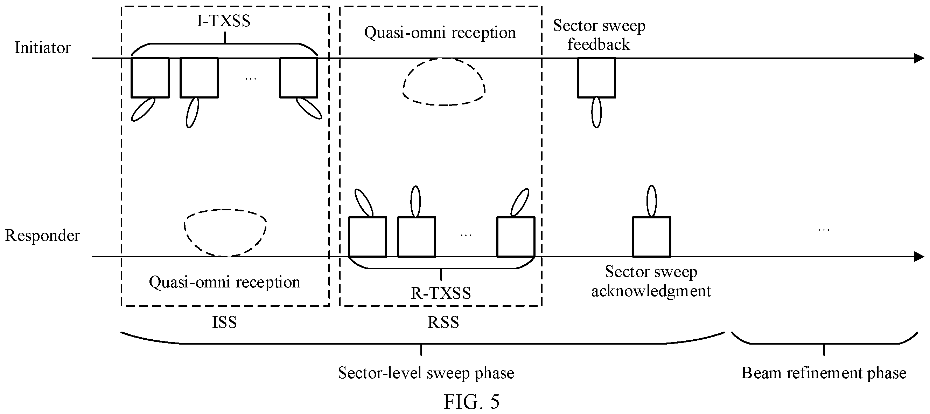

FIG. 5 is an example of an 802.11ad beamforming procedure. Overall, the procedure may enable each of two devices to complete respective beam training as a transmitter and a receiver. High-frequency beamforming training starts from a sector-level sweep (sector-level sweep, SLS) phase initiated by an initiator (initiator). The SLS phase is used to enable two devices to meet at least a high-robustness and low-rate communication requirement. Generally, in the SLS phase, only beamforming training of a transmitter (initiator-transmit sector sweep (initiator-transmit sector sweep, I-TXSS) or R-TXSS) is provided. Certainly, there may further be beamforming training of a receiver, for example, a responder-receive sector sweep (responder-receive sector sweep, R-RXSS) or an initiator-receive sector sweep (initiator-receive sector sweep, I-RXSS).

After the SLS phase, if required by the initiator or a responder, a beam refinement protocol (beam refinement protocol, BRP) phase may exist. The BRP phase is used to provide training of the receiver and beam refinement (or referred to as antenna weight vector (antenna weight vector, AWV) refinement) of the receiver and the transmitter. In addition, there may be a beam training method for beam tracking (beam tracking) in beamforming.

Specifically, the SLS phase may include the following steps:
1: The initiator directionally sends frames in a plurality of directions (a responder receives the frames in a quasi-omni mode).
2: The responder directionally sends frames (carrying an optimal transmit beam in step 1) in a plurality of directions. In this case, the initiator receives the frames in a quasi-omni mode.
3: The initiator directionally sends, by using a sector sweep feedback frame (carrying a responder optimal transmit beam in step 2), an initiator optimal transmit beam recommended by the responder in step 2.
4: The responder directionally sends, by using a sector sweep acknowledgment frame, a responder optimal transmit beam recommended by the initiator in step 3.

In the foregoing manner, the two devices obtain, from each other, the optimal transmit beams that can communicate with the peer devices. It should be noted that only training of the transmit beam is generally completed in the SLS, but training of a receive beam direction of the receiver is not completed. Therefore, only a basic communication requirement can be met.

Certainly, beamforming training of the I-RXSS or the R-RXSS may alternatively be provided in the SLS phase. Beams sent during the R-RXSS correspond to a same antenna pattern (antenna pattern). For example, quasi-omni beams may be sent constantly. For behavior of the initiator, the initiator no longer receives the beams in quasi-omni mode, but directionally receives the beams. In this way, a requirement of a device with a weak transmitter capability can be met, and a peer device performs beam training of the receiver to achieve a same objective of meeting the basic communication requirement. The SLS phase may occur in a DTI phase, or may occur in a BTI+A-BFT phase. When the SLS occurs in the BTI+A-BFT phase, a sector sweep acknowledgment process in the SLS in FIG. 5 does not exist.

In 802.11ad, initial beam training related to a STA and a PCP or an AP is mainly completed in a BTI and A-BFT. The BTI corresponds to an ISS phase, and the A-BFT corresponds to an RSS phase and a sector sweep feedback phase. A specific process is as follows:
1: In the BTI phase, the PCP or the AP sends beacon frames in various directions, where an A-BFT length field in the frame indicates a number of slots (slots) in the A-BFT phase.
2: A STA that receives the beacon frame randomly selects a slot in [0, A-BFT length-1] in the subsequent A-BFT phase for access, and then sequentially sends sector sweep (sector sweep, SSW) frames through a directional antenna (that is, an R-TXSS phase). The SSW frame includes an optimal transmit beam of the PCP or the AP. In addition, the PCP or the AP receives beams from various directions through a quasi-omni antenna, and records an optimal transmit beam of the STA. 3: Enter the sector sweep feedback (SSW Feedback) phase. In this case, the PCP or the AP feeds back, to the STA via a directional beam, optimal transmit beam information in the responder sector sweep (responder sector sweep, RSS) phase. In this case, the STA is in a quasi-omni reception mode.

At this point, the PCP or the AP may complete beamforming training of a transmitter with the STA, to meet a basic communication requirement.

To meet access training requirements of more users, an enhanced directional multi-Gigabit (enhanced directional multi-Gigabit, EDGM) STA type is added to 802.11ay. Different from a conventional DGM STAin 802.11ad, the EDGM STA can transmit both an SSW frame and a short (short) SSW frame in an A-BFT slot planned in an A-BFT phase. Compared with the SSW frame, the short SSW frame has a shorter frame length, so that the EDGM STA can transmit more data in one slot. In addition, the EDMG STA may use a BTI phase to obtain more A-BFT slots and the like. Overall, an SLS procedure in 802.11ay is similar to that in 802.11ad, and details are not described herein again.

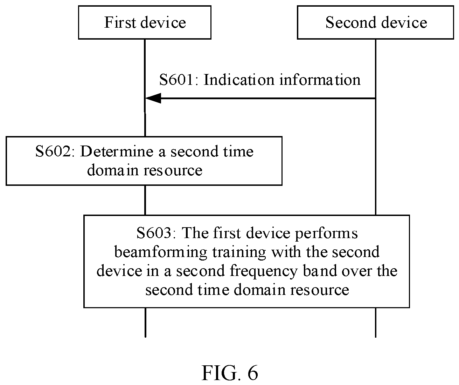

Currently, in a beamforming training process in a high-low frequency collaboration system, one-to-one training is usually performed. For example, beamforming training is performed between one device and one device. Consequently, beamforming training efficiency needs to be improved. For this problem, an embodiment of this application provides a communication method, to improve beamforming training efficiency, so as to improve communication efficiency. The method is shown in FIG. 6, and may include the following steps.

S601: A second device sends indication information to a first device, and correspondingly, the first device receives the indication information.

The indication information may indicate a first time domain resource, the first time domain resource may be used for beamforming training of N devices, N is a positive integer greater than or equal to 1, and the first device is one of the N devices. In other words, the first time domain resource may be used for beamforming training of one or more devices. Beamforming training of the one or more devices may be understood as beamforming training between the one or more devices and a transmitter of the indication information (that is, the first device).

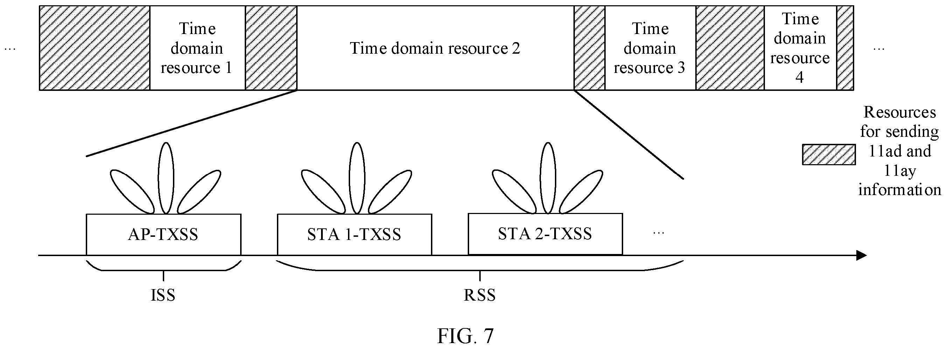

The first time domain resource may also be referred to as an available window, a time window, or a time period (period). When the time domain resource is used for beamforming training, the time domain resource may also be referred to as a beamforming training window. As shown in FIG. 7, beamforming training may be performed in a first time domain resource range. A name of the time domain resource is not limited in embodiments of this application. A type of the first time domain resource may be a time domain resource of an AP or a PCP beamforming training type, and the first time domain resource can support one-to-one or one-to-many beamforming training. In other words, the type of the time domain resource indicated by the indication information is the AP/PCP beamforming type. It should be understood that there may be a plurality of types of first time domain resources. For example, the first time domain resource may alternatively be a time domain resource of a service period (SP) type, a time domain resource of a contention-based access period (CBAP) type, or the time domain resource of the AP or the PCP beamforming training type. The time domain resource of the service period type or the time domain resource of the contention-based access period type supports one-to-one beamforming training.

It should be understood that the first device may be an AP, or may be a STA. The second device may be an AP, or may be a STA. In other words, the solutions in embodiments of this application may be applicable to beamforming training between APs, beamforming training between an AP and a STA, and beamforming training between STAs. This is not limited in embodiments of this application. It should be further understood that when the second device is an AP and the first device is a STA, the AP may send the indication information to the STA, where the indication information indicates a time domain resource for beamforming training between the STA and another STA. This is not limited in embodiments of this application.

Optionally, the second device may send the indication information to the first device in a first frequency band. The first frequency band may be a low frequency band. For example, a maximum frequency of the first frequency band may be 7 GHz.

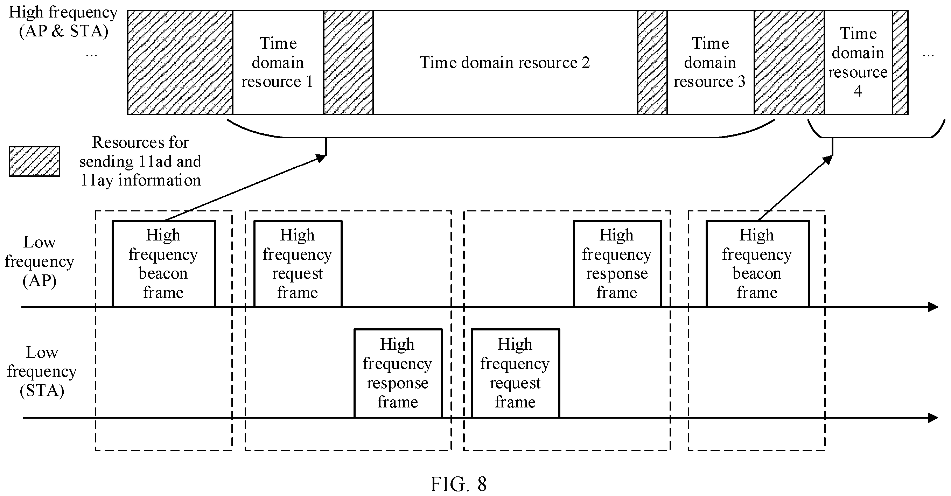

In a possible manner, the indication information may be carried in a high frequency beacon frame. In other words, the second device sends the high frequency beacon frame in the first frequency band, where the high frequency beacon frame includes the indication information. The first time domain resource indicated by the indication information may be a time domain resource between a first high frequency beacon frame and a second high frequency beacon frame, where the second beacon frame is a next beacon frame of the first beacon frame. For example, as shown in FIG. 8, an example in which the first device is a STA and the second device is an AP is used. The AP may send a high frequency beacon frame #A in a low frequency band, where indication information included in the high frequency beacon frame #A indicates time domain resources between the high frequency beacon frame #A and a high frequency beacon frame #B, for example, a first time domain resource 1, a first time domain resource 2, and a first time domain resource 3 in the figure. The first time domain resource may be one of the three time domain resources, two of the three time domain resources, or all of the three time domain resources. This is not limited in embodiments of this application. It may be understood that the high frequency beacon frame #B is a next high frequency beacon frame of the high frequency beacon frame #A. In other words, the high frequency beacon frame #A and the high frequency beacon frame #B are two consecutive high frequency beacon frames, and the time domain resources between the two high frequency beacon frames include the time domain resource that can be used for beamforming training.

Optionally, the first device may alternatively send a high frequency request frame or a high frequency response frame in FIG. 8 carrying the indication information.

It should be understood that the high frequency beacon frame is merely used as an example of the first beacon frame, and the first beacon frame is used to carry high frequency related information in the low frequency band. The high frequency beacon frame may alternatively have another name. This is not limited in embodiments of this application. The high frequency request frame is merely used as an example of a request frame, and the high frequency response frame is merely used as an example of a response frame. Details are not described again.

Optionally, when the first time domain resource needs to be changed, the first device and the second device may alternatively communicate by using the high frequency request frame or the high frequency response frame, to change a time-frequency location of the first time domain resource through negotiation.

It should be understood that the foregoing description is provided by using an example in which a specific frame indicates the time domain resource. In specific implementation, a transmitter and a receiver (that is, the first device and the second device) may alternatively determine, through interaction on the specific frame, the time domain resource (that is, the first time domain resource) used for beamforming training. This is not limited in embodiments of this application.

The indication information may be a field, an element, a frame, or the like. This is not limited in embodiments of this application. The following uses an example in which the indication information is an element for description.

There may be the following several cases for the indication information:
Case 1: The indication information is included in one element (element).

The indication information includes first information and N pieces of second information, and the N pieces of second information one-to-one correspond to the N devices. The first information indicates the first time domain resource, and the N pieces of second information indicate configuration information of the N devices. The first information and the N pieces of second information belong to a same element. In other words, the second device may indicate time domain resources and the related configuration information of the N devices to the first device via one piece of signaling (for example, one element).

For example, the first information may indicate at least one of the following: a beamforming type, the quantity N of devices, an identifier of the first time domain resource, a start location of the first time domain resource, or a length of the first time domain resource.

The beamforming type includes an AP/PCP-TXSS and an R-TXSS, or an AP/PCP-TXSS and an R-RXSS. When N is a positive integer greater than or equal to 2, there may be a plurality of R-TXSSs or R-RXSSs for the N devices. Alternatively, the beamforming type may be an AP/PCP-TXSS. Alternatively, the beamforming type may be an R-TXSS or an R-RXSS. When N is a positive integer greater than or equal to 2, there may be a plurality of R-TXSSs or R-RXSSs for the N devices.

In a possible manner, the beamforming type may be indicated by the second device to the first device. For example, the second device indicates the beamforming type to the first device in the indication information. For example, the second device may indicate different beamforming types by using different values of a field. As shown in Table 1, when a value of the beamforming type subfield is 0, it indicates that a beamforming type that exists in a beamforming training process between the second device and the N devices includes an AP/PCP-TXSS and one or more R-TXSSs/R-RXSSs. When a value of the beamforming type subfield is 1, it indicates that a beamforming type that exists in a beamforming training process between the second device and the N devices includes an AP/PCP-TXSS. When a value of the beamforming type subfield is 2, it indicates that a beamforming type that exists in a beamforming training process between the second device and the N devices includes one or more R-TXSSs/R-RXSSs, which means that there is only beamforming training of one or more responders on the time domain resource, and beamforming training of an initiator may be performed on another time domain resource. For example, a value of a beamforming type subfield on the another time domain resource may be 1. In other words, content indicated by the value 0 of the beamforming type subfield may be implemented over different time domain resources. For example, one time domain resource is used for the AP/PCP-TXSS, and another time domain resource is used for the one or more R-TXSSs/R-RXSSs. This is not limited in embodiments of this application.

It should be further understood that the AP/PCP-TXSS in Table 1 may also be replaced with an AP/PCP-RXSS. This is not limited in embodiments of this application. Similar parts are not described in below, for example, Table 2.

It should be understood that, in this embodiment of this application, an example in which the initiator is an AP/PCP is used for description. The AP/PCP-TXSS may also be referred to as an I-TXSS, and the AP/PCP-RXSS may also be referred to as an I-RXSS. This is not limited in embodiments of this application.

**Table 1 Correspondence between the value of the beamforming type subfield and indicated content**

| Value of the beamforming type subfield | Description |
|---|---|
| 0 | AP/PCP-TXSS+one or more R-TXSSs/R-RXSSs |
| 1 | AP/PCP-TXSS |
| 2 | One or more R-TXSSs/R-RXSSs |
| 3 | Reserved (reserved) |

It should be understood that the correspondence between the value of the field and the content indicated by the field is merely used as an example instead of a limitation. The correspondence between the value of the field and the content indicated by the field may be predefined, or may be indicated. This is not limited in embodiments of this application.

That the first information may indicate the start location of the first time domain resource may be understood as indicating a start location of the first time domain resource in time domain. Alternatively, the first information may indicate an end location of the first time domain resource. Alternatively, the first information may indicate a predefined location of the first time domain resource, for example, a middle location of the first time domain resource. This is not limited in embodiments of this application. It should be further understood that the first information indicates the start location of the first time domain resource and the length of the first time domain resource, or the first information may indicate the start location and the end location of the first time domain resource, or the first information may indicate the end location of the first time domain resource and the length of the first time domain resource, or the first information may indicate the predefined location of the first time domain resource and the length of the first time domain resource. This is not limited in embodiments of this application.

For example, second information corresponding to the first device in the N pieces of second information may indicate an identifier of the first device, a start location of a second time domain resource, or an offset value of a start location of a second time domain resource relative to the start location of the first time domain resource.

It should be understood that the second information corresponding to the first device may indicate the start location of the second time domain resource, or may indicate an end location of the second time domain resource, or may indicate a predefined location of the second time domain resource, for example, a middle location of the second time domain resource. The second information indicates the offset value of the start location of the second time domain resource relative to the start location of the first time domain resource, or may indicate an offset value of the start location of the second time domain resource relative to the end location of the first time domain resource, or may indicate an offset value of the start location of the second time domain resource relative to the predefined location of the first time domain resource, for example, an offset value of the start location of the second time domain resource relative to the middle location of the first time domain resource.

Alternatively, the second information corresponding to the first device may indicate an offset value of the end location of the second time domain resource relative to the start location of the first time domain resource, or may indicate an offset value of the end location of the second time domain resource relative to the end location of the first time domain resource, or may indicate an offset value of the end location of the second time domain resource relative to the predefined location of the first time domain resource, for example, the middle location.

Alternatively, the second information corresponding to the first device may indicate an offset value of the predefined location of the second time domain resource relative to the start location of the first time domain resource, or may indicate an offset value of the predefined location of the second time domain resource relative to the end location of the first time domain resource, or may indicate an offset value of the predefined location of the second time domain resource relative to the predefined location of the first time domain resource, for example, the middle location. The predefined location of the second time domain resource may be the middle location of the second time domain resource.

This is not limited in embodiments of this application.

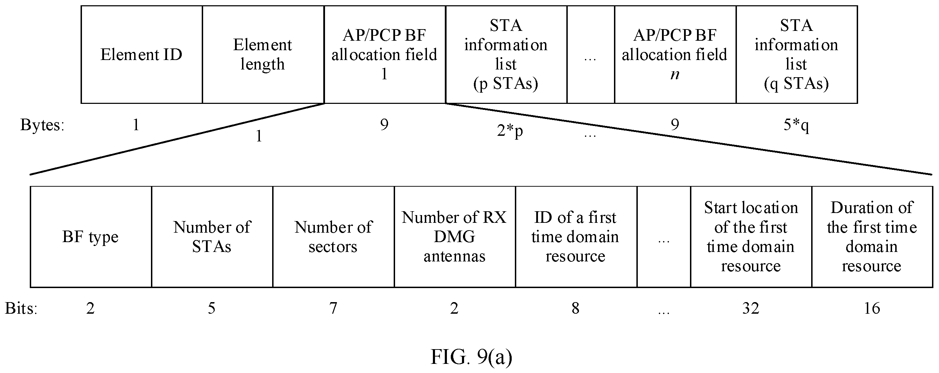

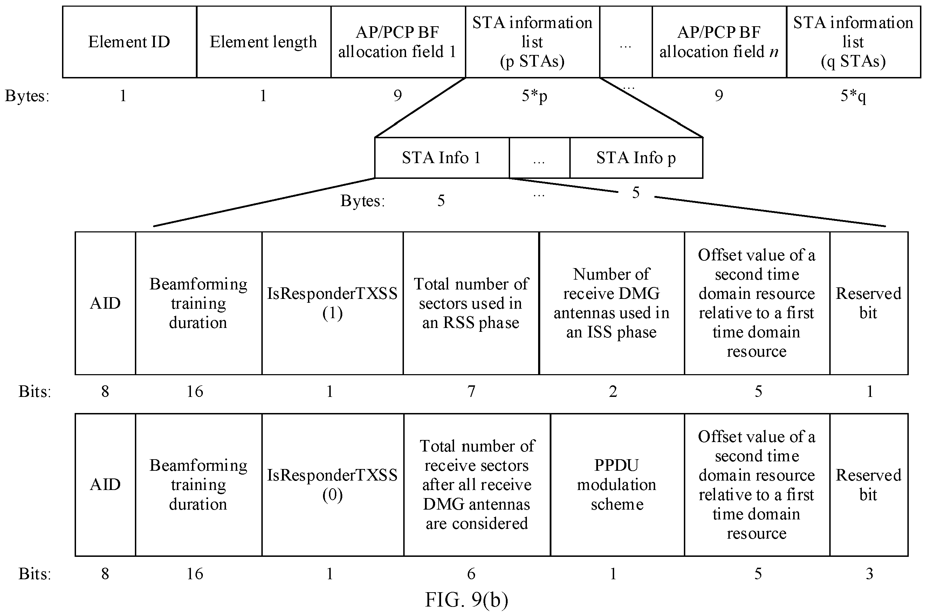

Specifically, an example of the indication information is shown in FIG. 9(a) and FIG. 9(b).

As shown in FIG. 9(a), the indication information is an element, and includes the first information (AP/PCP BF allocation fields) and the N pieces of second information (STAinformation list fields). It can be seen that the first information and the second information belong to a same element, are respectively different fields in the element. The indication information includes an element ID (element ID), an element length (length), m AP/PCP BF allocation fields, and m STA information lists. A number of bytes corresponding to content of each part may be follows: The element ID corresponds to 1 byte, the element length corresponds to 1 byte, and each of the plurality of AP/PCP BF allocation fields corresponds to 9 bytes. A number of bytes corresponding to the STA information list is related to a number of STAs, for example, when the STA information list includes information about p STAs, the STA information list corresponds to 5*p bytes. It should be understood that the number of bytes occupied by each part is merely used as an example instead of a limitation.

Content indicated by the AP/PCP BF allocation field includes a beamforming type (BF type), a number of STAs (number of STAs), a number of sectors (total number of sectors), a number of RX DMG antennas (number of RX DMG antennas), the ID of the first time domain resource (window ID), the start location of the first time domain resource (window start time), and duration of the first time domain resource (window duration). It may be understood that the first information may further indicate other content that is represented by an ellipsis in the figure. Details are not described herein.

Information indicating the beamforming type (BF type) may occupy 2 bits, information indicating the number of STAs (number of STAs) may occupy 5 bits, information indicating the number of sectors (total number of sectors) may occupy 7 bits, information indicating the number of RX DMG antennas (number of RX DMG antennas) may occupy 2 bits, information indicating the ID of the first time domain resource (window ID) may occupy 8 bits, information indicating the start location of the first time domain resource (window start time) may occupy 32 bits, and information indicating the duration of the first time domain resource (window duration) may occupy 16 bits. It should be understood that numbers of bits occupied by the foregoing parts of information are merely used as examples instead of limitations.

An example of the N pieces of second information is shown in FIG. 9(b). The N pieces of second information include information about p STAs, that is, N=p. The N pieces of second information one-to-one correspond to the p STAs. Second information corresponding to one of the STAs is used as an example, for example, STA Info 1. The information may further have two cases:
Case A: A beamforming type of a responder is a TXSS.

The second information includes an identifier (AID) of a station that performs beamforming training with the AP/PCP (that is, the second device), STA beamforming duration (STA BF Duration, that is, a length of the second time domain resource), indication information indicating that the responder is the TXSS (IsResponderTXSS), a total number of sectors (Total Number of Sectors) used by a station (that is, the first device) in an RSS phase, a number of receive DMG antennas (Number of RX DMG Antennas) used by the station (that is, the first device) in an ISS phase, an offset value of the second time domain resource relative to the start location of the first time domain resource (STA Start Offset), and a reserved (reserved) bit.

Information indicating the identifier (AID) of the station that performs beamforming training with the AP/PCP (that is, the second device) may occupy 8 bits, information indicating the STA beamforming duration (STA BF Duration, that is, the length of the second time domain resource) may occupy 16 bits, the indication information indicating that the responder is the TXSS (IsResponderTXSS) may occupy 1 bit, information indicating the total number of sectors (Total Number of Sectors) used by the station (that is, the first device) in the RSS phase may occupy 7 bits, information indicating the number of receive DMG antennas (Number of RX DMG Antennas) used by the station (that is, the first device) in the ISS phase may occupy 2 bits, information indicating the offset value of the second time domain resource relative to the start location of the first time domain resource (STA Start Offset) may occupy 5 bits, and the reserved (reserved) bit may occupy 1 bit.

Case B: A beamforming type of a responder is an RXSS.

The second information includes an identifier (AID) of a station that performs beamforming training with the AP/PCP (that is, the second device), STA beamforming duration (STA BF Duration, that is, a length of the second time domain resource), indication information indicating that the responder is the RXSS (IsResponderTXSS), a total number of receive sectors after a station (that is, the first device) considers all receive DMG antennas (RXSS Length), a PPDU modulation scheme (RXSSTxRate), an offset value of the second time domain resource relative to the start location of the first time domain resource (STA Start Offset), and a reserved (reserved) bit. Information indicating the identifier (AID) of the station that performs beamforming training with the AP/PCP (that is, the second device) may occupy 8 bits, information indicating the STA beamforming duration (STA BF Duration, that is, the length of the second time domain resource) may occupy 16 bits, the indication information indicating that the responder is the RXSS (IsResponderTXSS) may occupy 1 bit, information indicating the total number of receive sectors after the station (that is, the first device) considers all the receive DMG antennas (RXSS Length) may occupy 6 bits, information indicating the PPDU modulation scheme (RXSSTxRate) may occupy 1 bit, information indicating the offset value of the second time domain resource relative to the start location of the first time domain resource (STA Start Offset) may occupy 5 bits, and the reserved (reserved) bit may occupy 3 bits.

In the foregoing two cases, indication information indicating whether the responder is the TXSS (IsResponderTXSS) may occupy 1 bit. A value 1 of the bit may indicate that the responder is the TXSS, and a value 0 of the bit may indicate that the responder is the RXSS. A correspondence between the value of the bit and the indicated content may be predefined, or may be indicated by the second device to the first device. This is not limited in embodiments of this application. The correspondence between the value of the bit and the content indicated by the value of the bit may alternatively be in another manner. For example, the value 1 of the bit may indicate that the responder is the RXSS, and the value 0 of the bit may indicate that the responder is the TXSS. This is not limited in embodiments of this application.

In the foregoing example, the AP/PCP performs an AP/PCP-TXSS by default, and may also perform an AP/PCP-RXSS. Specifically, whether the AP/PCP performs the AP/PCP-TXSS or the AP/PCP-RXSS may be indicated in an AP/PCP BF allocation field by using an additional 1 bit, or may be indicated in an AP BF type subfield in an AP/PCP BF allocation field by using an additional entry. This is not limited in embodiments of this application.

It should be further understood that the numbers of bits occupied by the foregoing parts of information and locations of the foregoing parts of information are merely used as examples instead of limitations. Names of the foregoing parts of information are merely used as examples. There may be other names in a future communication scenario or in another communication system, but information with similar functions shall fall within the protection scope of this application.

Information of STA Info 2 to STA Info p may be the same as or different from content of the STA Info 1. This is not limited in embodiments of this application.

Case 2: The indication information is included in a plurality of elements.

An example in which the indication information is included in two elements is used below for description.

The indication information includes first indication information and second indication information, the first indication information indicates the first time domain resource, the second indication information indicates configuration information of the N devices, and the first indication information and the second indication information belong to different elements.

For example, the first indication information may indicate at least one of the following: an identifier of the first time domain resource, a start location of the first time domain resource, or duration of the first time domain resource.

The identifier of the first time domain resource may be used to associate with the second indication information.

That the first indication information may indicate the start location of the first time domain resource may be understood as indicating a start location of the first time domain resource in time domain. Alternatively, the first information may indicate an end location of the first time domain resource. Alternatively, the first information may indicate a predefined location of the first time domain resource, for example, a middle location of the first time domain resource. This is not limited in embodiments of this application. It should be further understood that the first information indicates the start location of the first time domain resource and a length of the first time domain resource, or the first information may indicate the start location and the end location of the first time domain resource, or the first information may indicate the end location of the first time domain resource and a length of the first time domain resource, or the first information may indicate the predefined location of the first time domain resource and a length of the first time domain resource. This is not limited in embodiments of this application.

Optionally, the first indication information may further indicate the type of the first time domain resource. The type of the first time domain resource may be AP BF. The first time domain resource of this type supports beamforming training between one device and a plurality of devices. In other words, the type of the time domain resource indicated by the first indication information is the AP BF. It should be understood that the AP BF is merely used as an example instead of a limitation. When the first time domain resource is used for beamforming training between a plurality of first devices such as STAs, the type of the first time domain resource may also be referred to as BF. A name of the type of the time domain resource is not limited in embodiments of this application. Alternatively, the type of the first time domain resource may be a contention-based access period (contention-based access period, CBAP), or may be a service period (service period, SP).

It should be understood that the first indication information may indicate a plurality of time domain resources, and each of the plurality of time domain resources may be used for beamforming training. This is not limited in embodiments of this application.

For example, the second indication information includes third information and N pieces of fourth information, the N pieces of fourth information one-to-one correspond to the N devices, and the third information may indicate a beamforming type, the quantity N of devices, or the identifier of the first time domain resource.

The identifier of the first time domain resource is used to associate with the first indication information. In other words, if the first indication information and the second indication information include a same identifier of the first time domain resource, the first indication information and the second indication information are associated with each other.

For example, fourth information corresponding to the first device may indicate at least one of the following: an identifier of the first device, a start location of a second time domain resource, or an offset value of a start location of a second time domain resource relative to the start location of the first time domain resource.

It should be understood that the fourth information corresponding to the first device may indicate the start location of the second time domain resource, or may indicate an end location of the second time domain resource, or may indicate a predefined location of the second time domain resource, for example, a middle location of the second time domain resource. The second information indicates the offset value of the start location of the second time domain resource relative to the start location of the first time domain resource, or may indicate an offset value of the start location of the second time domain resource relative to the end location of the first time domain resource, or may indicate an offset value of the start location of the second time domain resource relative to the predefined location of the first time domain resource, for example, an offset value of the start location of the second time domain resource relative to the middle location of the first time domain resource.

Alternatively, the fourth information corresponding to the first device may indicate an offset value of the end location of the second time domain resource relative to the start location of the first time domain resource, or may indicate an offset value of the end location of the second time domain resource relative to the end location of the first time domain resource, or may indicate an offset value of the end location of the second time domain resource relative to the predefined location of the first time domain resource, for example, the middle location.

Alternatively, the fourth information corresponding to the first device may indicate an offset value of the predefined location of the second time domain resource relative to the start location of the first time domain resource, or may indicate an offset value of the predefined location of the second time domain resource relative to the end location of the first time domain resource, or may indicate an offset value of the predefined location of the second time domain resource relative to the predefined location of the first time domain resource, for example, the middle location. The predefined location of the second time domain resource may be the middle location of the second time domain resource.

This is not limited in embodiments of this application.

The beamforming type indicated by the third information may include an I-TXSS and an R-RXSS, may include an I-RXSS and an R-TXSS, may include an I-TXSS and an R-TXSS, may include an I-RXSS and an R-RXSS, may be an R-TXSS only (only), may be an R-RXSS only (only), or may include an AP-TXSS and an R-TXSS/R-RXSS. When N is a positive integer greater than or equal to 2, there may be a plurality of R-TXSSs or R-RXSSs for the N devices. Alternatively, the beamforming type may be an AP-TXSS only (only). Alternatively, the beamforming type may be an R-TXSS or an R-RXSS. When N is a positive integer greater than or equal to 2, there may be a plurality of R-TXSSs or R-RXSSs for the N devices.

It should be understood that the beamforming type in embodiments of this application may also be referred to as a beamforming format, and the beamforming type in embodiments of this application may be a set of beamforming types of two beamforming training parties.

In a possible manner, the beamforming type may be indicated by the second device to the first device. For example, the second device indicates the beamforming type to the first device in the third information. For example, the second device may indicate different beamforming types by using different values of a field. As shown in Table 2, when a value of the beamforming type subfield is 0, it indicates that a beamforming type that exists in a beamforming training process between the second device and the N devices includes an I-TXSS and an R-RXSS. When a value of the beamforming type subfield is 1, it indicates that a beamforming type that exists in a beamforming training process between the second device and the N devices includes an I-RXSS and an R-TXSS. When a value of the beamforming type subfield is 2, it indicates that a beamforming type that exists in a beamforming training process between the second device and the N devices includes an I-TXSS and an R-TXSS. When a value of the beamforming type subfield is 3, it indicates that a beamforming type that exists in a beamforming training process between the second device and the N devices includes an I-RXSS and an R-RXSS. When a value of the beamforming type subfield is 4, it indicates that a beamforming type that exists in a beamforming training process between the second device and the N devices is an R-TXSS (only). When a value of the beamforming type subfield is 5, it indicates that a beamforming type that exists in a beamforming training process between the second device and the N devices is an R-RXSS (only). When a value of the beamforming type subfield is 6, it indicates that a beamforming type that exists in a beamforming training process between the second device and the N devices includes an AP-TXSS and one or more R-TXSSs/R-RXSSs. When a value of the beamforming type subfield is 7, it indicates that a beamforming type that exists in a beamforming training process between the second device and the N devices is an AP-TXSS (only). When a value of the beamforming type subfield is 8, it indicates that a beamforming type that exists in a beamforming training process between the second device and the N devices includes one or more R-TXSSs/R-RXSSs. Values 9 to 16 of the beamforming type subfield may be represented as reserved bits.

**Table 2 Correspondence between the value of the beamforming type subfield and indicated content**

| Value of the BF type subfield | Description |
|---|---|
| 0 | I-TXSS and R-RXSS |
| 1 | I-RXSS and R-TXSS |
| 2 | I-TXSS and R-TXSS |
| 3 | I-RXSS and R-RXSS |
| 4 | R-TXSS only |
| 5 | R-RXSS only |
| 6 | AP-TXSS+one or more R-TXSSs/R-RXSSs |
| 7 | AP-TXSS only |
| 8 | One or more R-TXSSs/R-RXSSs |
| 9 to 16 | Reserved |

It should be understood that the correspondence between the value of the field and the content indicated by the field is merely used as an example instead of a limitation. The correspondence between the value of the field and the content indicated by the field may be predefined, or may be indicated. This is not limited in embodiments of this application.

In a possible manner, the first indication information may also indicate the beamforming type. In other words, the third information may be carried in the first indication information. This is not limited in embodiments of this application. It should be understood that when a location of the third information changes, a location, a number of bytes, or a number of bits of related information may also change. This is not limited in embodiments of this application.

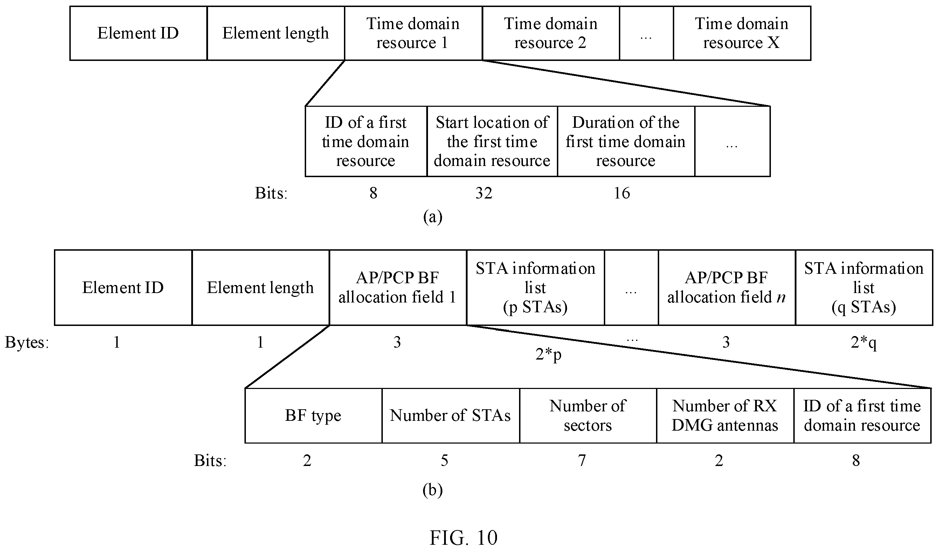

Specifically, an example of the indication information is shown in FIG. 10.
(a) in FIG. 10 is an example of the first indication information, and the first indication information includes indication information of a plurality of time domain resources. The indication information includes an element ID (element ID), an element length (length), and indication information of X time domain resources. An example in which a time domain resource 1 is a time domain resource corresponding to the first device is used. Indication information of the time domain resource 1 may include an ID of the time domain resource, a start location of the time domain resource, duration of the time domain resource, and the like. A number of bits corresponding to each part of content may be as follows: The ID of the time domain resource may occupy 8 bits, the start location of the time domain resource may occupy 32 bits, and the duration of the time domain resource may occupy 16 bits. It may be understood that the information about the time domain resource may further indicate other content that is represented by an ellipsis in the figure. Details are not described herein. It should be understood that numbers of bits occupied by the foregoing parts of information are merely used as examples instead of limitations.
(b) in FIG. 10 is an example of the second indication information. The second indication information includes the third information (AP/PCP BF allocation fields) and the N pieces of fourth information (STA information list fields). Specifically, for the third information and the fourth information, refer to related descriptions of the first information and the second information in Case 1. Details are not described herein again.

It should be further understood that the numbers of bits occupied by the foregoing parts of information and locations of the foregoing parts of information are merely used as examples instead of limitations. Names of the foregoing parts of information are merely used as examples. There may be other names in a future communication scenario or in another communication system, but information with similar functions shall fall within the protection scope of this application.

S602: The first device determines the second time domain resource.

It should be understood that the maximum frequency of the first frequency band is less than a minimum frequency of a second frequency band. For example, the second frequency band may be a frequency band greater than or equal to 45 GHz. The second time domain resource is a subset of the first time domain resource.

The first device determines the second time domain resource in the following two manners:
Manner 1: Corresponding to Case 1 in step S601, the first device may receive the indication information, and determine the first information based on the indication information, to further determine the first time domain resource; and determine the second information based on the indication information, and determine a location of the second time domain resource relative to the first time domain resource and the length of the second time domain resource, to further determine the second time domain resource.
Manner 2: Corresponding to Case 2 in step S601, the first device may receive the first indication information and the second indication information. The first device determines the first time domain resource based on the first indication information. The first device receives the second indication information, and determines that an ID of the first time domain resource in the first indication information is the same as the ID of the first time domain resource in the second indication information, to further determine that the first indication information and the second indication information are associated with each other. In other words, the second time domain resource indicated in the second indication information is a resource in the first time domain resource indicated in the first indication information. In other words, the second time domain resource indicated in the second indication information may be determined based on the first time domain resource. The first device may determine the second time domain resource based on the location of the second time domain resource relative to the first time domain resource and the length of the second time domain resource that are indicated by the second indication information. When the third information includes information about a plurality of STAs, the first device may determine, based on a device identifier like a STA ID in the fourth information, information about a time domain resource allocated to the first device.

S603: The first device performs beamforming training with the second device in the second frequency band over the second time domain resource.

In the method, in the high-low frequency collaboration system, the foregoing information is exchanged in the low frequency band, so that allocation of a beamforming type-related time domain resource corresponding to the PCP/AP and the STA can be completed, for example, a start time, duration, a beamforming type, and a number of STAs for beamforming corresponding to the time domain resource, and the STA can complete beamforming training with the PCP/AP on the time domain resource when performing communication at a high frequency. In addition, the time domain resource supports beamforming training between a plurality of STAs and the PCP/AP. This improves beamforming training efficiency and further improves communication efficiency.

It should be understood that, in this embodiment of this application, an example in which the two beamforming training parties are an AP and a STA is used for description. However, this application is not limited thereto. For example, beamforming training may alternatively be performed between STAs, or beamforming training may be performed between APs.

It should be understood that the specific examples shown in FIG. 6 in embodiments of this application are merely intended to help a person skilled in the art better understand embodiments of this application, but are not intended to limit the scope of embodiments of this application. It should be further understood that a value of a sequence number of each of the foregoing processes does not mean an order of an execution sequence. The execution sequence of each process should be determined based on a function and internal logic of each process, and should not be construed as any limitation on the implementation processes of embodiments of this application.

It should be further understood that in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that in some of the foregoing embodiments, a device in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, methods and operations implemented by the devices (for example, the first device and the second device) may alternatively be implemented by a component (for example, a chip or a circuit) of the device.

The foregoing describes in detail, with reference to FIG. 6, the communication method provided in embodiments of this application. The communication method is mainly described from a perspective of interaction between the first device and the second device. It may be understood that to implement the foregoing functions, the first device and the second device include corresponding hardware structures and/or software modules for performing the functions.

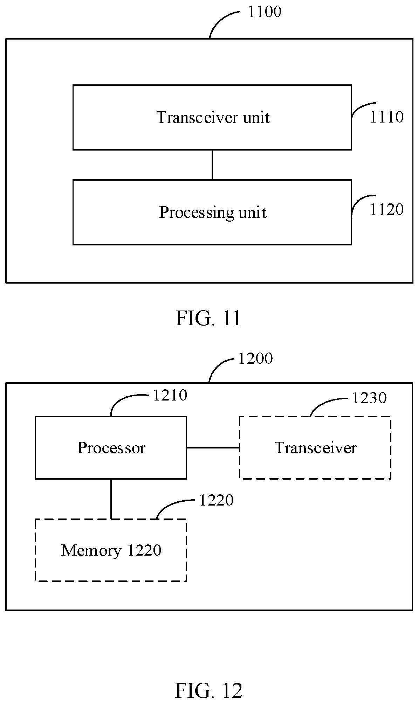

A person skilled in the art should be able to be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application. The following describes in detail communication devices provided in embodiments of this application with reference to FIG. 11 and FIG. 12. It should be understood that descriptions of apparatus embodiments correspond to the descriptions of the method embodiments. Therefore, for content that is not described in detail, refer to the foregoing method embodiments. For brevity, some content is not described again.

In embodiments of this application, a transmit device or a receive device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, and is merely logical function division. In actual implementation, another division manner may be used. Descriptions are provided below by using an example in which each functional module is obtained through division based on each corresponding function.

FIG. 11 is a block diagram of an apparatus 1100 according to an embodiment of this application. The apparatus 1100 includes a transceiver unit 1110 and a processing unit 1120. The transceiver unit 1110 may implement a corresponding communication function, and the processing unit 1120 is configured to process data. The transceiver unit 1110 may also be referred to as a communication interface or a communication unit.

Optionally, the apparatus 1100 may further include a storage unit. The storage unit may be configured to store instructions and/or data. The processing unit 1120 may read the instructions and/or the data in the storage unit, so that the apparatus implements the foregoing method embodiments.

The apparatus 1100 may be configured to perform actions performed by the communication devices (for example, the first device and the second device) in the foregoing method embodiments. In this case, the apparatus 1100 may be the first device like a STA or a component that can be configured in the STA. The transceiver unit 1110 is configured to perform an operation related to sending/receiving on a first device side in the foregoing method embodiments. The processing unit 1120 is configured to perform an operation related to processing on the first device side in the foregoing method embodiments.

In a design, the apparatus 1100 is configured to perform an action performed by the first device in the method embodiment.

In a possible implementation, the processing unit 1120 is configured to determine a second time domain resource of the first device like the STA, and the transceiver unit 1110 is configured to receive indication information, where the indication information indicates a first time domain resource and the second time domain resource.

The apparatus 1100 may implement the steps or procedures performed by the first device in the method embodiment according to embodiments of this application. The apparatus 1100 may include units configured to perform the methods performed by the first device in the method embodiments. In addition, the units in the apparatus 1100 and the foregoing other operations and/or functions are separately used to implement corresponding procedures in the method embodiments of the first device in the method embodiments.

When the apparatus 1100 is configured to perform the method in FIG. 6, the transceiver unit 1110 may be configured to perform receiving and sending steps in the method, for example, step S601; and the processing unit 1120 may be configured to perform processing steps in the method, such as steps S602 and S603.

It should be understood that a specific process in which the units perform the foregoing corresponding steps is described in detail in the foregoing method embodiments, and for brevity, details are not described herein.

In another design, the apparatus 1100 is configured to perform an action performed by the second device in the method embodiment.

In a possible implementation, the receiving unit 1110 is configured to receive and send indication information, where the indication information indicates a first time domain resource, or indicates a first time domain resource and a second time domain resource.

The apparatus 1100 may implement the steps or procedures performed by the second device in the method embodiment according to embodiments of this application. The apparatus 1100 may include units configured to perform the methods performed by the second device in the method embodiments. In addition, the units in the apparatus 1100 and the foregoing other operations and/or functions are separately used to implement corresponding procedures in the method embodiments of the second device in the method embodiments.

When the apparatus 1100 is configured to perform the method in FIG. 6, the transceiver unit 1110 may be configured to perform receiving and sending steps in the method, for example, step S601; and the processing unit 1120 may be configured to perform a processing step in the method, for example, step S603.

It should be understood that a specific process in which the units perform the foregoing corresponding steps is described in detail in the foregoing method embodiments, and for brevity, details are not described herein.

The processing unit 1120 in the foregoing embodiment may be implemented by at least one processor or a processor-related circuit. The transceiver unit 1110 may be implemented through a transceiver or a transceiver-related circuit. The storage unit may be implemented by at least one memory.

As shown in FIG. 12, an embodiment of this application further provides an apparatus 1200. The apparatus 1200 includes a processor 1210, and may further include one or more memories 1220. The processor 1210 is coupled to the memory 1220. The memory 1220 is configured to store a computer program or instructions and/or data. The processor 1210 is configured to execute the computer program or the instructions and/or the data stored in the memory 1220, so that the methods in the foregoing method embodiments are performed. Optionally, the apparatus 1200 includes one or more processors 1210.

Optionally, the memory 1220 may be integrated with the processor 1210, or separately disposed. Optionally, as shown in FIG. 12, the apparatus 1200 may further include a transceiver 1230, and the transceiver 1230 is configured to receive and/or send a signal. For example, the processor 1210 is configured to control the transceiver 1230 to receive and/or send the signal.

In a solution, the apparatus 1200 is configured to implement operations performed by the communication devices (for example, the first device and the second device) in the foregoing method embodiments.

An embodiment of this application further provides a computer-readable storage medium. The computer-readable storage medium stores computer instructions used to implement the methods performed by the communication devices (for example, the first device and the second device) in the foregoing method embodiments.

For example, when a computer program is executed by a computer, the computer is enabled to implement the methods performed by the communication devices (for example, the first device and the second device) in the foregoing method embodiments.

An embodiment of this application further provides a computer program product including instructions. When the instructions are executed by a computer, the computer is enabled to implement the methods performed by the communication devices (for example, the first device and the second device) in the foregoing method embodiments.

An embodiment of this application further provides a communication system. The communication system includes the first device and the second device in the foregoing embodiments.

For explanations and beneficial effects of related content in any one of the apparatuses provided above, refer to the corresponding method embodiment provided above. Details are not described herein again.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor. It should further be noted that the memory described in this specification aims to include but is not limited to these memories and any memory of another appropriate type.

A person of ordinary skill in the art may be aware that, in combination with the examples described in embodiments disclosed in this specification, units and methods can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the protection scope of this application.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to implement the solutions provided in this application.

In addition, functional units in embodiments of this application may be integrated into one unit, each of the units may exist alone physically, or two or more units may be integrated into one unit. All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a special-purpose computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first device in a first frequency band, indication information from a second device, wherein the indication information indicates a first time domain resource, the first time domain resource is used for beamforming training between N devices and the second device, the first device is one of the N devices, and N is a positive integer greater than or equal to 2; and
determining, by the first device, a second time domain resource, and performing beamforming training with the second device in a second frequency band over the second time domain resource, wherein the second time domain resource belongs to the first time domain resource, and a maximum frequency of the first frequency band is less than a minimum frequency of the second frequency band.

2. The method according to claim 1, wherein the indication information is carried in a first beacon frame, the first time domain resource is between the first beacon frame and a second beacon frame, and the second beacon frame is a next beacon frame of the first beacon frame.

3. The method according to claim 1 or 2, wherein the indication information comprises first information and N pieces of second information, the N pieces of second information one-to-one correspond to the N devices, the first information indicates the first time domain resource, the N pieces of second information indicate configuration information of the N devices, and the first information and the N pieces of second information belong to a same element; and
the determining, by the first device, a second time domain resource comprises:
determining, by the first device, the second time domain resource based on the first information and/or second information corresponding to the first device.

4. The method according to claim 3, wherein the first information indicates at least one of the following:
a beamforming type, the quantity N of devices, an identifier of the first time domain resource, or a start location of the first time domain resource and a length of the first time domain resource.

5. The method according to claim 3 or 4, wherein the second information corresponding to the first device indicates at least one of the following:
an identifier of the first device, a start location of the second time domain resource, or an offset value of a start location of the second time domain resource relative to the start location of the first time domain resource.

6. The method according to claim 1 or 2, wherein the indication information comprises first indication information and second indication information, the first indication information indicates the first time domain resource, the second indication information indicates configuration information of the N devices, and the first indication information and the second indication information belong to different elements; and
the determining, by the first device, a second time domain resource comprises:
determining, by the first device, the second time domain resource based on the first indication information and the second indication information.

7. The method according to claim 6, wherein the first indication information indicates at least one of the following:
an identifier of the first time domain resource, or a start location of the first time domain resource and duration of the first time domain resource, wherein the identifier of the first time domain resource is used to associate with the second indication information.

8. The method according to claim 6 or 7, wherein the second indication information comprises third information and N pieces of fourth information; the N pieces of fourth information one-to-one correspond to the N devices; the third information indicates a beamforming type, the quantity N of devices, or the identifier of the first time domain resource; and fourth information corresponding to the first device indicates at least one of the following:
an identifier of the first device, a start location of the second time domain resource, or an offset value of a start location of the second time domain resource relative to the start location of the first time domain resource.

9. The method according to claim 8, wherein the method further comprises:
determining, by the first device based on the identifier that is of the first time domain resource and that is indicated by the third information and the identifier that is of the first time domain resource and that is indicated by the first indication information, that the second time domain resource indicated by the fourth information is associated with the first time domain resource.

10. The method according to any one of claims 1 to 9, wherein on the first time domain resource, the beamforming type comprises an access point-transmit sector sweep AP-TXSS and at least one responder-transmit sector sweep R-TXSS, or an AP-TXSS and at least one responder-receive sector sweep R-RXSS.

11. A communication method, comprising:
sending, by a second device, indication information in a first frequency band, wherein the indication information indicates a first time domain resource, the first time domain resource is used for beamforming training between N devices and the second device, and N is a positive integer greater than or equal to 2; and
performing, by the second device, beamforming training with a first device in a second frequency band over a second time domain resource, wherein the second time domain resource belongs to the first time domain resource, a maximum frequency of the first frequency band is less than a minimum frequency of the second frequency band, and the first device is one of the N devices.

12. The method according to claim 11, wherein the indication information is carried in a first beacon frame, the first time domain resource is between the first beacon frame and a second beacon frame, and the second beacon frame is a next beacon frame of the first beacon frame.

13. The method according to claim 11 or 12, wherein the indication information comprises first information and N pieces of second information, the N pieces of second information one-to-one correspond to the N devices, the first information indicates the first time domain resource, the N pieces of second information indicate configuration information of the N devices, and the first information and the N pieces of second information belong to a same element.

14. The method according to claim 13, wherein the first information indicates at least one of the following:
a beamforming type, the quantity N of devices, an identifier of the first time domain resource, or a start location of the first time domain resource and a length of the first time domain resource.

15. The method according to claim 13 or 14, wherein second information corresponding to the first device indicates at least one of the following:
an identifier of the first device, a start location of the second time domain resource, or an offset value of a start location of the second time domain resource relative to the start location of the first time domain resource, wherein the first device is one of the N devices.

16. The method according to claim 11 or 12, wherein the indication information comprises first indication information and second indication information, the first indication information indicates the first time domain resource, the second indication information indicates configuration information of the N devices, and the first indication information and the second indication information belong to different elements.

17. The method according to claim 16, wherein the first indication information indicates at least one of the following:
an identifier of the first time domain resource, or a start location of the first time domain resource and duration of the first time domain resource, wherein the identifier of the first time domain resource is used to associate with the second indication information.

18. The method according to claim 16 or 17, wherein the second indication information comprises third information and N pieces of fourth information; the N pieces of fourth information one-to-one correspond to the N devices; the third information indicates a beamforming type, the quantity N of devices, or the identifier of the first time domain resource; and fourth information corresponding to the first device indicates at least one of the following:
an identifier of the first device, a start location of the second time domain resource, or an offset value of a start location of the second time domain resource relative to the start location of the first time domain resource, wherein the first device is one of the N devices.

19. The method according to any one of claims 11 to 18, wherein on the first time domain resource, the beamforming type comprises an AP-TXSS and at least one R-TXSS, or an AP-TXSS and at least one R-RXSS.

20. A communication apparatus, comprising a unit or module configured to perform the method according to any one of claims 1 to 10.

21. A communication apparatus, comprising a unit or module configured to perform the method according to any one of claims 11 to 19.

22. A communication system, comprising at least one communication apparatus according to claim 20 and at least one communication apparatus according to claim 21.

23. A computer-readable storage medium, wherein the computer-readable storage medium stores computer instructions, and when the computer instructions are run on a communication apparatus, the apparatus is enabled to perform the method according to any one of claims 1 to 19.

24. A computer program product, comprising instructions, wherein when the computer instructions are run on a communication apparatus, the apparatus is enabled to perform the method according to any one of claims 1 to 19.
